Europäisches Patentamt

European Patent Office

Office européen des brevets

Publication number: **0 285 296**
**A2**

# EUROPEAN PATENT APPLICATION

Application number: 88302425.9

Int. Cl.⁴ **F16C 1/06**

Date of filing: 18.03.88

Priority: 03.04.87 US 33709

Date of publication of application:
05.10.88 Bulletin 88/40

Designated Contracting States:
BE CH DE ES FR GB LI SE

Applicant: THE BABCOCK & WILCOX
COMPANY
1010 Common Street P.O. Box 60035
New Orleans Louisiana 70160(US)

Inventor: Bibb, Henry Q.
7610 Timberlake Road
Lynchburg Virginia 24502(US)

Representative: Cotter, Ivan John et al
D. YOUNG & CO. 10 Staple Inn
London WC1V 7RD(GB)

Flexible shafts.

A flexible, hollow, beaded shaft (10) is formed from a plurality of links (12), inner member connecting blocks (14), and outer shells (16). Each link (12) has enlarged spherical ends (18) pivotally received by separate connecting blocks (14). Pins (26) which protrude radially from the spherical ends (18) transmit rotational torque between the links (12) and connecting blocks (14). The outer shells (16) fit closely over the connecting blocks (14) and provide a relatively high pull force to the assembled shaft (10).

FIG.1

EP 0 285 296 A2

# FLEXIBLE SHAFTS

This invention relates to flexible shafts. More particularly, but not exclusively, the invention relates to flexible shafts for use in inspecting tubes, for example steam generator tubes.

In the generation of electricity through the use of nuclear power, use is made of steam generators which are provided with tubes which may be straight or U-shaped. Routine inspection of these tubes is required to determine the presence of flaws or cracks which may lead to leakage of coolant. Inspection is normally carried out by an eddy current probe which is placed inside each tube in contact with the inner surface and rotated along the inner surface as the probe is caused to traverse the length of the tube. U-shaped tubes present special problems not encountered with straight tubes because the U-bend does not have a round cross section but instead is oval in shape with the narrow side of the oval lying along the radius of the U (i.e.vertical) while the wide side of the oval is displaced approximately 90° from the narrow side (i.e. horizontal). Rotating a shaft while bent in a U-shape results in a bending stress reversal on each revolution. This shortens the life of the shaft. Also, shafts have an initial bend or set in them which causes a whip on each revolution of the shaft. This results in a variable angular shaft velocity which causes the coil of the eddy probe mounted on the shaft to move with a varying velocity and/or momentarily to lift away from the tube surface. Both of these effects are undesirable because the information received through the probe will be inaccurate with respect to the actual condition of the tube being examined. Also, the shaft on which the eddy current probe is mounted must be hollow to permit wires connected to the rotating member of a slip ring to be routed through the shaft so they can be connected to the rotating eddy current coil.

The applicants are aware of the following publications which disclose flexible joints and shafts.

US Patent No. US-A-1 276 117 entitled "Flexible Armored Conduit" discloses a flexible conduit which houses a wire and allows longitudinal movement of the wire within the conduit. The conduit comprises duplicate sections having a ball portion and a socket portion with an axial opening through the ball portion. In assembly, the ball of one section is placed within the socket of another section and the margin of the socket is crimped around the ball.

US-A-1 695 263 entitled "Flexible Tubular Conduit" discloses a flexible delivering conduit for conducting a lubricant or fluid under pressure. An annular packing washer and washer pressing spring on the inner end of a socket press against a ball terminal in the socket to prevent leakage of fluid.

US-A-1 827 432 entitled "Flexible Joint" discloses a flexible metallic conduit capable of resisting high internal pressures. A tubular body with caps threaded on each end forms the joint. Balls threaded onto pipe ends are seated in apertures formed in the ends of the caps. Compressible washers and cup washers prevent leakage of oil.

US-A-1 500 921 entitled "Flexible Pipe Line" discloses a ball and socket joint for flexible pipelines wherein a ball member is provided with a packing ring and the parts are held in an assembled position by an annular cap.

US-A-3 096 962 entitled "Locking Device For A Measuring Apparatus Or The Like" discloses a locking device consisting of loose parts which are hingeable with respect to one another and are connected with one another by means of a dragband extending through a bore of said parts.

Although the known are discloses the use of flexible shafts and joints, none of the above patents discloses a structure which meets the requirements for examining steam generator U-shaped tubes. The structure desirably should be able to transmit rotational torque through a U-shaped bend with a consistent shaft velocity with no probe liftoff from the tube surface. Also, the structure should desirably have a minimum pull force (the force at which the ball and socket joints separate) preferably of 133 to 180N (30 to 40 lbf) to ensure that the shaft can be pulled free of any obstructions in a tube.

Respective different aspects of the invention are set forth in claims 1, 3 and 7.

A preferred embodiment of the invention described in detail hereinbelow with reference to the accompanying drawings solves the aforementioned problems in a simple and straightforward manner. The embodiment provides a hollow beaded shaft formed from a plurality of links, inner member connecting blocks, and outer shells. Each link is formed from a hollow tubular member having spherical ends. Two connecting block halves which are mirror images of each other form the inner member and have their ends configured to receive spherical ends of separate links. Roll pins which protrude from the links between the two halves transmit rotational torque between the links and connecting blocks when the entire shaft is rotated. The outer shells are tubular shaped with longitudinal bores sized to receive two connecting block halves in position around the spherical ends of two links. The outer shells may be fastened to the connecting block halves by the use of an adhesive and provides a minimum pull force higher than that in structure previously used and known. The preferred flexible shaft thus is capable of transmitting rotational torque, has a relatively high minimum pull force, is capable of travelling through a U-bend in a tube, and enables the provision of constant shaft velocity and no probe lift-off.

The invention will now be further described, by way of illustrative and non-limiting example, with reference to the accompanying drawings, in which like parts are designated by like reference numerals throughout, and in which:

Figure 1 illustrates an assembled flexible shaft embodying the invention, the shaft being shown partially in section and in use in a U-bend tube;

Figure 2 is a partially cut away side view of an outer shell of the shaft;

Figure 3 is an end view of the outer shell taken along lines 3-3 in Figure 2;

Figure 4 is a partially cut away side view of an inner member connecting block of the shaft;

Figure 5 is an end view of the connecting block taken along lines 5-5 in Figure 4;

Figure 6 is a partially cut away side view of a link of the shaft;

Figure 7 is an end view of the link taken along lines 6-6 in Figure 6; and

Figure 8 is an exploded view of components of the shaft.

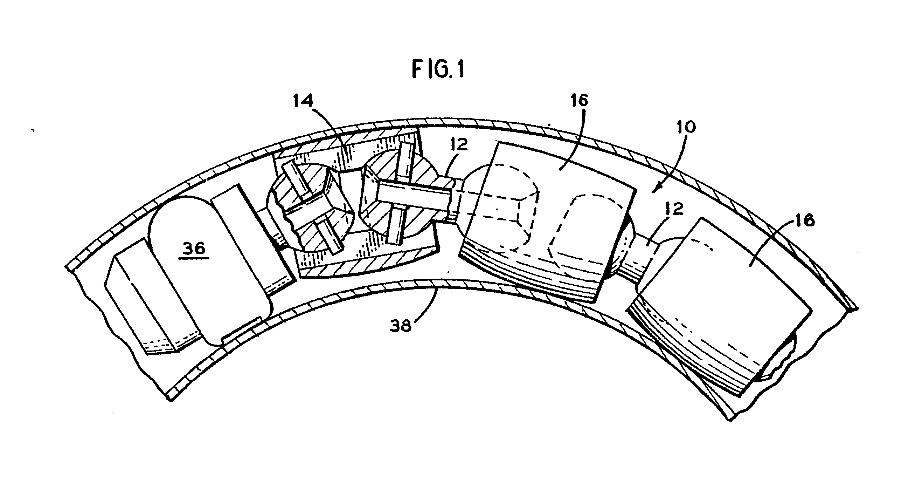

Referring to the drawings, Figure 1 shows a flexible shaft 10 which comprises links 12, inner member connecting blocks 14, and outer shells 16.

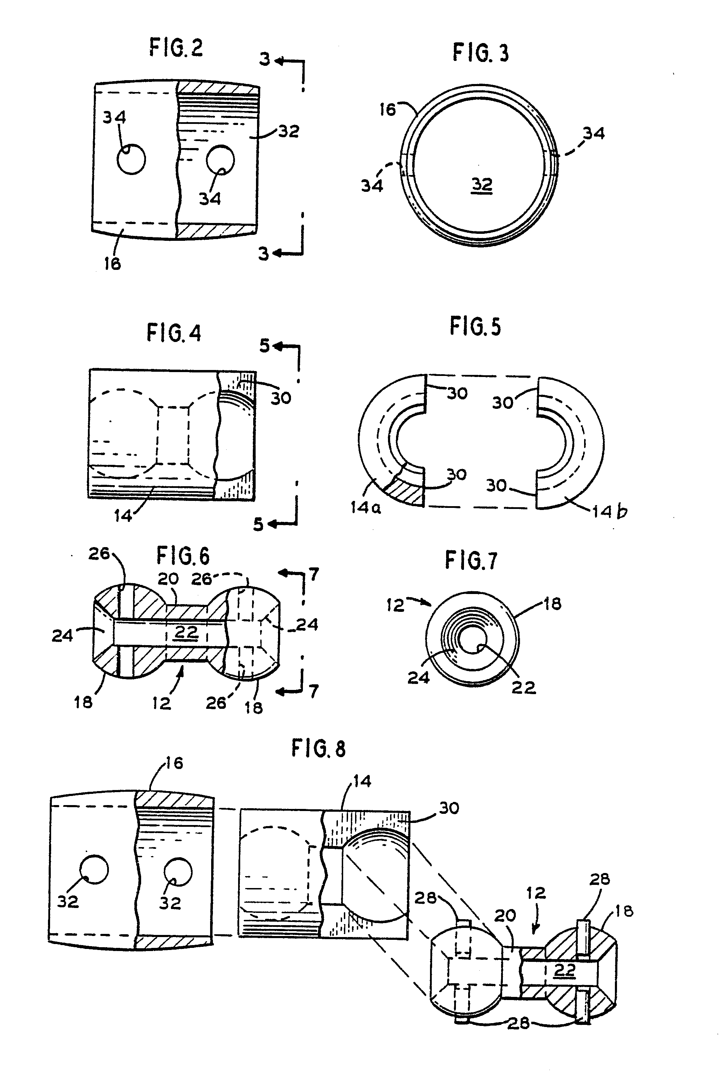

Each of the links 12 is formed from a hollow tubular member having enlarged spherical ends 18 which define a narrow centre waist 20. As best seen in Figures 6 and 7, each link 12 is provided with a longitudinal bore 22 to serve as a passage for wiring. Each end of the bore 22 is provided with a bevelled edge 24 to provide ample room for the passage of wiring and minimise the potential for binding during use of the shaft 10. Means for transmitting rotational torque and causing rotation of the assembled shaft 10 is provided in the form of a radial bore 26 extending substantially through the centre of each enlarged spherical end 18 and a suitable rigid member such as a roll pin 28 which extends from each of the radial bores 26. In this preferred embodiment, the roll pins 28 transmit rotational torque between the links 12 and the inner member connecting blocks 14.

Each of the inner member connecting blocks 14, one of which is illustrated in Figures 4 and 5, is formed from two halves 14a, 14b which are mirror images of each other and provide a substantially cylindrical exterior shape to the block 14 when the two halves are positioned around spherical ends 18 of two separate links 12. Each half 14a, 14b is arranged to pivotally receive a spherical end 18 by having its internal surface contoured and sized to match the exterior surface of a link 12. Each half 14a, 14b is also arranged to allow the roll pins 28 to extend between the two halves by their being sized such that edges 30 thereof do not meet when assembled around the links 12. Each inner member connecting block 14 is received within an outer shell 16.

As shown in Figures 1 to 3 and 8, each outer shell 16 is tubular shaped and has a longitudinal bore 32 sized so as closely to receive the halves 14a, 14b of a connecting block 14 when in position around spherical ends 18 of links 12. Means for securing the outer shell 16 to the connecting block 14 is provided in the form of a plurality of radial bores 34. Once the outer shell 16 is in position over the connecting block 14, any suitable means of attachment such as an adhesive may be placed in the radial bores 34. In this preferred embodiment, four bores 34 are provided to ensure adequate contact of the adhesive with the outer shell 16 and the connecting block 14.

In assembly and operation, the flexible shaft 10 is assembled by inserting roll pins 28 into the radial bores 26 provided in the links 12. Inner member connecting block halves 14a, 14b are positioned around spherical ends 18 of two different links 12 so that the roll pins 28 extend between the edges 30 of each half. An outer shell 16 is positioned over the connecting block halves 14a, 14b and secured in position by placing any suitable adhesive such as glue into the bores 34 provided in the outer shell 16. Wiring may be run through the longitudinal bores 22 in the links 12 as the required number of links are assembled together to obtain a flexible shaft of the desired length. A special end link attached to necessary equipment such as an eddy current probe 36 is provided at one end of the flexible shaft 10 for conducting nondestructive testing of a tube 38. The other end of the flexible shaft 10 is connected to equipment known in the art for causing rotation of the flexible shaft 10. Rotational torque transmitted to one of the links 12 is transmitted to an inner member connecting block 14 by roll pins 28. The connecting block 14 then transmits this rotational torque to the next link 12 housed therein. This is carried out throughout the entire assembly to cause a constant velocity of rotation of testing equipment such as the eddy current probe 36. The flexible shaft 10 travels easily through the bend in the tube 38 as illustrated in Figure 1 since the links 12 are pivotally received by the inner member connecting blocks 14.

Claims

1. A flexible shaft (10) comprising:
a link (12) enlarged spherical ends (18);
a connecting block (14) arranged to pivotally receive the spherical ends (18);
means (26, 28) on the link (12) for transmitting rotational torque between the link (12) and the connecting block (14); and
an outer shell (16) arranged to closely receive the connecting block (14).

2. A flexible shaft according to claim 1, wherein the means (26, 28) for transmitting rotational torque comprises radial bores (26) through the spherical ends (18) and a pin (28) positioned in each of the radial bores (26) and extending outside of the bore.

3. A flexible shaft (10) comprising:
a link (12) having enlarged spherical ends (18), the spherical ends (18) having radial bores (26) therethrough;
a connecting block (14) arranged to pivotally receive the spherical ends (18);
a pin (26) extending from each of the radial bores (26) for transmitting rotational torque between the link (12) and the connecting block (14); and
an outer shell (16) having a longitudinal bore (32) arranged to closely receive the connecting block (14).

4. A flexible shaft according to claim 1, claim 2 or claim 3, wherein the link (12) is provided with a longitudinal bore (22) therethrough.

5. A flexible shaft according to any one of the preceding claims, wherein the outer shell (16) is fixedly attached to the connector block (14).

6. A flexible shaft according to any one of the preceding claims, wherein the connector block (14) comprises two separate halves (14a, 14b).

7. A flexible shaft (10) comprising: at least two links (12) having enlarged spherical ends (18), the spherical ends (18) having radial bores (26) therethrough;
a connecting block (14) which comprises two separate halves (14a, 14b) arranged to pivotally receive the spherical ends (18) of the links (12);
a pin (28) extending from each of the radial bores (26) between the halves (14a, 14b) of the connecting block (14) for transmitting rotational torque between the links (12) and the connecting block (14); and
an outer shell (16) having a longitudinal bore (32) arranged to closely receive the connecting block (14).

8. A flexible shaft according to claim 7, wherein each of the links (12) is provided with a longitudinal bore (22) therethrough.

9. A flexible shaft according to claim 7 or claim 8, wherein the outer shell (16) is fixedly attached to the connecting block (14).

## FIG.1

FIG.2

FIG.3

FIG.4

FIG.5

FIG.6

FIG.7

FIG.8